# EUROPEAN PATENT SPECIFICATION

(11) **EP 0 599 814 B1**
(45) Date of publication and mention of the grant of the patent: **16.04.1997**
(21) Application number: 94101393.0
(22) Date of filing: 30.07.1990
(51) Int. Cl.: H02J 9/06, H02M 7/48

(54) **Power supply system**
Energieversorgungssystem
Système d'alimentation en énergie

(30) Priority: 22.09.1989 JP 244952/89
(43) Date of publication of application: 01.06.1994
(62) Divisional of application: 90308368.1
(73) Proprietor: KABUSHIKI KAISHA TOSHIBA, Kawasaki-shi, Kanagawa-ken 210 (JP)
(72) Inventor: Hirata, Akio, c/o Intellectual Property Div., Minato-ku, Tokyo 105 (JP); Oshima, Hiroshi, c/o Intellectual Property Div., Minato-ku, Tokyo 105 (JP)
(74) Representative: Freed, Arthur Woolf

(56) References cited:
- DE-A- 3 334 578
- US-A- 3 612 894
- US-A- 3 818 272
- DATABASE WPI DERWENT PUBLICATIONS LTD., LONDON, GB SU888263 7 December 1981, DOBRUSIN 'CONTINUOUS POWER SUPPLY PROTECTION - BY RESPONDING TO DIFFERENT FAULTS USING NOR-GATES AND FLIP-FLOPS OPERATING WITH COMPARATOR'
- PATENT ABSTRACTS OF JAPAN vol. 8, no. 250 (E-279) 16 November 1984 & JP-A-59 127 579 (MEIDENSHA) 23 July 1984
- PATENT ABSTRACTS OF JAPAN vol. 13, no. 121 (E-732) 24 March 1989 & JP-A-63 290 125 (TOSHIBA) 28 November 1988
- PATENT ABSTRACTS OF JAPAN vol. 14, no. 45 (E-880) 26 January 1990 & JP-A-01 274 620 (MITSUBISHI) 2 November 1989

## Description

The present invention relates to a power supply system for supplying a constant-voltage, constant-frequency output and, more particularly, to an uninterruptible power supply system having a protective function against output overcurrents.

The inventors have proposed uninterruptible power supply system of an overcurrent protective scheme including two overcurrent detecting elements, i.e., a detecting element for detecting an overcurrent output from an inverter so as to protect internal components of the system, and a detecting element for detecting a load-side overcurrent due to an external factor such as an abnormal state of the load. Since both the elements are required to have high-speed detection functions, it is difficult to control their protective functions.

The inventors state that the overcurrent detection level of this inverter output should be generally set to be higher than that of a load current. However, the waveform of a load current is changed due to an AC filter arranged in the circuit. Owing to recent high-speed switching elements, the inverter control technique has been rapidly improved. However, if waveform improvement control is performed to cause the waveform of an output voltage from the inverter to approximate to a sine wave, a peak value of an inverter output current becomes much higher than that of a load current depending on a type of load. As a result, the inverter output overcurrent detecting function for protecting the internal components of the system is operated in response to an overcurrent caused by a load-side factor, thus stopping the uninterruptible power supply system.

If the difference between the overcurrent detection level of an inverter output and that of a load current is increased to solve the above-described problem, the operating efficiency of a semiconductor element of the inverter is degraded, and the system is increased in cost.

It is accordingly an object of the present invention to provide a power supply system having a protective function which can satisfactorily protect the system against overcurrents without degrading the reliability of the system.

According to one aspect of the present invention, there is provided an AC power supply system constituted by at least two uninterruptible power supplies, connected in parallel with each other, for supplying stable power to a load, said AC power supply sytem comprising: means for, when a fault occurs in either of said uninterruptible power supplies, stopping an operation of said uninterruptible power supply which failed, and temporarily disconnecting the failed uninterruptible power supply from the load; means for determining whether the fault is caused by an internal factor of said uninterruptible power supply or by an external factor thereof; and means for, when it is determined that the fault is caused by the external factor, restarting said uninterruptible power supply which failed so as to perform a parallel operation thereof with said uninterruptible power supply in which no fault was detected.

According to another aspect of the present invention, there is provided an AC power supply system constituted by at least two uninterruptible power supplies, connected in parallel with each other, for supplying stable power to a load, said AC power supply system comprising: means for, when a fault occurs in either of said uninterruptible power supplies, stopping an operation of said uninterruptible power supply which failed, and temporarily disconnecting the failed uninterruptible power supply from the load; means for determining whether the fault is a permanent or transient fault; and means for, when it is determined that the fault is transient, restarting said uninterruptible power supply which failed and is stopped so as to perform a parallel operation thereof with said uninterruptible power supply in which no fault was detected.

This invention can be more fully understood from the following detailed description when taken in conjunction with the accompanying drawings, in which:
Fig. 1 is a block diagram showing an arrangement of an uninterruptible power supply system;
Figs. 2A to 2D are timing charts for explaining an operation of the system in Fig. 1;
Fig. 3 is a circuit diagram showing a detailed arrangement of an overcurrent factor detector (16) in the system in Fig. 1;
Figs. 4A to 4G are timing charts for explaining an operation of a sequencer (14) in the system in Fig. 1;
Figs. 5A to 5G are timing charts for explaining another operation of the sequencer (14) in the system in Fig. 1;
Fig. 6 is a block diagram showing a modification of the system in Fig. 1;
Fig. 7 is a block diagram showing an arrangement of an uninterruptible power supply system;
Fig. 8 is a block diagram showing a modification of the system in Fig. 7 according to an embodiment of the present invention;
Fig. 9 is a circuit diagram showing a detailed arrangement of a fault detector (29) in the system in Fig. 7;
Fig. 10 is a circuit diagram showing a detailed arrangement of a fault discriminator (57) in the system in Fig. 7;
Figs. 11A to 11D are timing charts for explaining an operation of a power supply operation stopper (27) in the system in Fig. 7;
Fig. 12 is a flow chart for explaining a routine in which the system in Fig. 7 is operated by a CPU using software;
Fig. 13 is a graph showing a relationship between a type of fault and the waveform of a detected overcurrent in the system in Fig. 1; and
Figs. 14A and 14B are graphs each showing a relationship between a type of fault and the phase of a detected overcurrent in the system in Fig. 1.

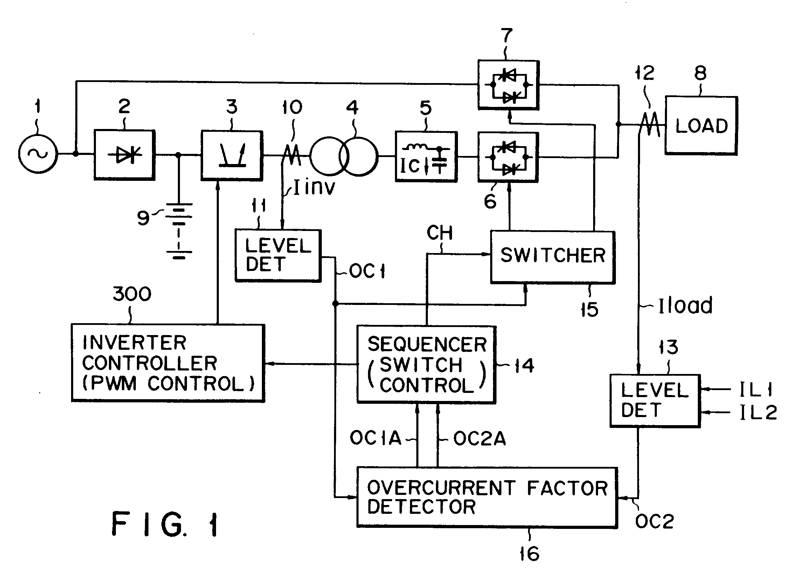

Fig. 1 is a block diagram showing an uninterruptible power supply system having an overcurrent protective function.

Referring to Fig. 1, reference numeral 1 denotes a commercial AC power source; 2, a rectifier for converting an AC voltage into a DC voltage; 3, an inverter for converting the DC power into AC power again; 4, an inverter transformer; 5, an AC filter for reducing the ripple of an AC output from inverter 3; 6 and 7, thyristor switches for switching the outputs of commercial power source 1 and inverter 3; 8, a load; 9, a storage battery; 10, a current transformer for detecting output current Iinv from inverter 3; 11, a level detector for detecting the level of detected output current Iinv; 12, a current transformer for detecting load current Iload supplied to load 8; 13, a level detector for detecting the level of detected load current Iload; 14, a sequencer of the uninterruptible power supply system; 15, a switcher for switching thyristor switches 6 and 7; and 16, an overcurrent factor detector. Reference symbol OC1A denotes an inverter overcurrent signal; and OC2A, a load current abnormality signal.

Inverter 3 generates an AC voltage by ON/OFF-controlling a DC voltage obtained by rectifying power from commercial power source 1 through rectifier 2. The level of the AC voltage generated by inverter 3 is converted by inverter transformer 4. In addition, the waveform of the AC voltage is improved by AC filter 5. The AC voltage is then applied to load 8 as a sine wave voltage through thyristor switch 6 on the inverter side. Storage battery 9 serves to supply DC power when commercial AC power source 1 fails.

Level detector 11 detects the level of current transformer 10 for detecting an inverter output. Upon detection of a current having a predetermined value (IL1) or more, level detector 11 outputs inverter overcurrent signal OC1. Signal OC1 is supplied to inverter controller 300 through overcurrent factor detector 16 and sequencer 14 so as to stop inverter 3. In addition, signal OC1 is supplied to switcher 15 so as to switch thyristor switches 6 and 7 from the inverter 3 side to the commercial AC power source 1 side, thus continuously supplying power to load 8.

Inverter overcurrent signal OC1 serves to protect inverter transformer 4 from deflective magnetization due to internal faults of the system, e.g., abnormal control of the inverter.

Level detector 13 serves to detect the level of current transformer 12 on the load side of the uninterruptible power supply system. When level detector 13 detects a current having the current value (IL1) or more, overcurrent protective sequence control often includes an automatic restoration function.

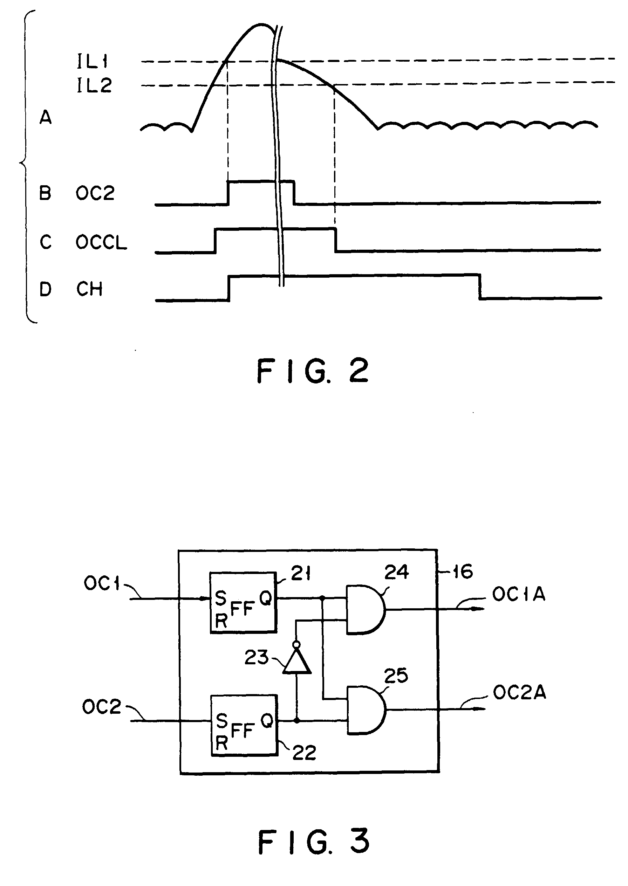

An overcurrent automatic restoration function sequence will be described below with reference to a timing chart in Fig. 2.

When the level of load current Iload becomes larger than first load current abnormality level setting signal IL1, and an overcurrent is detected, load current abnormality signal OC2 is output. Signal OC2 is input, as signal OC2A, to sequencer 14 through detector 16. When sequencer 14 supplies switch command CH to switcher 15, thyristor switches 6 and 7 are switched from the inverter 3 side to the commercial power source 1 side.

Meanwhile, sequencer 14 is not shifted to fault sequence control, and inverter 3 is set in a standby mode while it is stopped or continuously operated.

If the level of load current Iload becomes smaller than second load current restoration level setting signal IL2 after the elapse of a certain period of time, the cancellation of the overcurrent is detected, and load current abnormality restoration signal OCCL is output. In response to signal OCCL, switch command CH from sequencer 14 is reset and is supplied to switcher 15 so as to automatically switch thyristor switches 6 and 7 from the commercial AC power source 1 side to the inverter 3 side, thus restoring the system to the normal operation mode.

The automatic restoration sequence is applied to the above-described operation for the load overcurrent since a semiconductor element used for the inverter has a low overcurrent resistance. Various types of devices are connected to the load side of the uninterruptible power supply system. Computers and communication devices which are mainly connected to the uninterruptible power supply system as loads are mostly capacitor input type rectifier loads. For this reason, an inrush current several tens times larger than the rated load current may flow when such a load is connected to the uninterruptible power supply system. In addition, when a transformer is connected to the load side, an excitation inrush current several tens times larger than the rated load current often flows upon connection. The automatic restoration function is provided to prevent system down of the uninterruptible power supply system caused by such an overcurrent flowing for a short period of time when a load is connected to the system.

The above-described automatic restoration sequence can be easily realized by a logic circuit including two level setting units. In the uninterruptible power supply system, in order to thermally protect internal components, mainly semiconductor elements, another overcurrent protection is generally provided against a continuous overload state which does not reach the overcurrent detection level.

Fig. 3 shows an arrangement of overcurrent factor detector 16. Referring to Fig. 3, reference numerals 21 and 22 denote flip-flops for latching inverter output overcurrent signal OC1 and load current abnormality signal OC2; 23, a NOT gate; and 24 and 25, AND gates.

Assume that level detector 11 detects an over-current which is output from inverter 3 due to some factor. Inverter overcurrent signal OC1 is output from detector 11 (protection sequence). Switcher 15 switches thyristor switches 6 and 7 from the inverter mode (power supply by inverter 3) to the commercial power source mode (power supply by power source 1) so as to keep supplying power to load 8. At the same time, level detector 11 transmits signal OC1 to overcurrent factor detector 16. If the above-mentioned level detector 13 for detecting a load current is operated at this time, detector 13 transmits load current abnormality signal OC2 to overcurrent factor detector 16 (fault sequence).

In overcurrent factor detector 16, input inverter overcurrent signal OC1 is latched by flip-flop 21. When output overcurrent signal OC2 is latched by flip-flop 22 in this state, load current abnormality signal OC2A is output from AND gate 25. If the above-described automatic restoration sequence is executed by sequencer 14 to remove the overcurrent on the load side, power supply is restored to the inverter mode from the commercial power source mode.

If output overcurrent signal OC2 is not latched by flip-flop 22, an output from NOT gate 23 is set at logic "1", and inverter overcurrent signal OC1A is output from AND gate 24. As a result, the current sequence is shifted to the fault sequence in sequencer 14. Note that even in the protection sequence, the detection level (Iref) of an output overcurrent from inverter 3 must be set to be higher than the preset levels (IL1 and IL2) of a load-side overcurrent.

The fault sequence varies depending on the capacity and purpose of a system, the specifications required by a user, and the like. The sequence may include disconnection of an input breaker, and protective interruption of a gate block and the like of a rectifier. In addition, a restarting operation may be performed to increase the reliability.

As described above, the protection sequence, in which when an overcurrent is detected, power supply is switched from the inverter mode to the commercial power source mode so as to continue power supply, uses only overcurrent detection signal OC1 for output current Iinv from inverter 3, while overcurrent detection signal OC2 for a load current is used to determine whether an overcurrent factor exists in the system or the load. This prevents faulty interruption of the system shown in Fig. 1 caused when an overcurrent on the load 8 side is erroneously detected as an overcurrent output from inverter 3. Therefore, the reliability of the uninterruptible power supply system can be increased.

In the above description, thyristor switches 6 and 7 are used as a circuit for switching power supply between inverter 3 and commercial power source 1. However, it is apparent that a switching circuit constituted by mechanical switches such as electromagnetic contactors can be used.

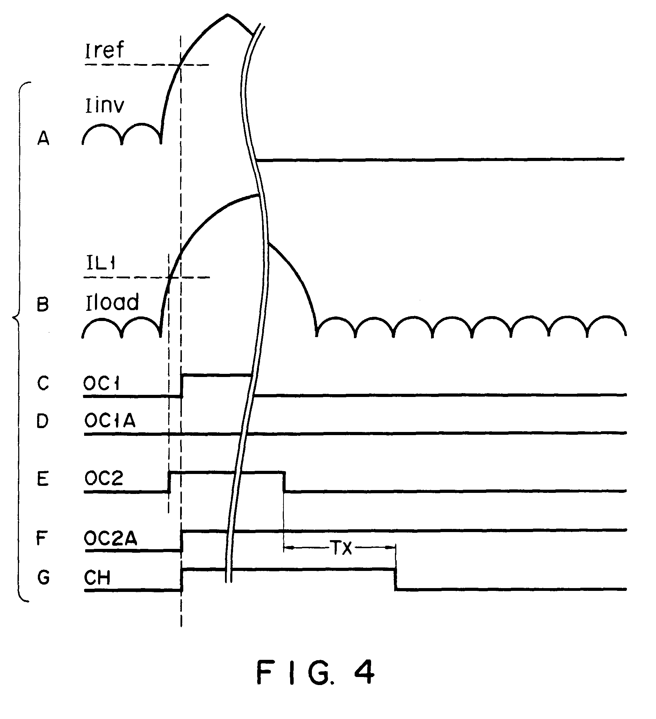

Figs. 4A to 4G are timing charts for explaining an operation of sequencer 14 to be performed when both inverter output current Iinv and load current Iload exceed detection levels Iref and IL1.

When inverter output current Iinv (Fig. 4A) exceeds overcurrent detection level Iref, inverter overcurrent signal OC1 (Fig. 4C) is output from detector 11. When load current Iload (Fig. 4B) exceeds detection level Ill, load current abnormality signal OC2 (Fig. 4E) is output from detector 13.

When signal OC2 is generated, load-side abnormality signal OC2A (Fig. 4A) is output from overcurrent factor detector 16. Switch command CH (Fig. 4G) is output from sequencer 14 in response to signal OC2A. With this operation, thyristor switches 6 and 7 are switched to cause power source 1 to supply power to load 8.

When load current Iload exceeds preset value IL1, load current abnormality signal OC2 is also generated (OC2 = "1"). In this case, if inverter overcurrent signal OC1 is canceled (OC1 = "0"), switch command CH is reset to "0" level a predetermined period of time (Tx) after signal OC2 is restored to "0" level (i.e., the load current abnormal state is canceled), thus restoring the current mode to the normal power supply mode (by means of inverter 3).

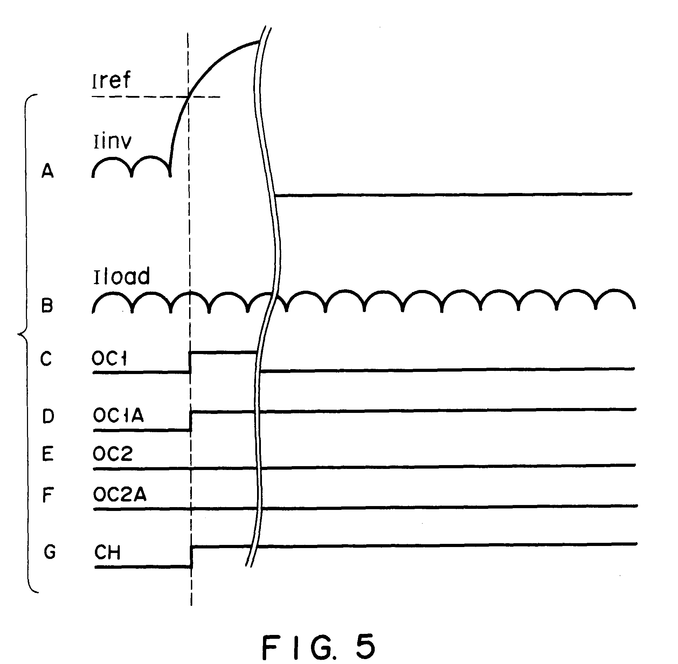

Figs. 5A to 5G are timing charts for explaining an operation of sequencer 14 to be performed when inverter output current Iinv exceeds detection level Iref, but load current Iload does not exceed load current detection level (IL1).

In this case, although inverter overcurrent detection signal OC1 (Fig. 5C) is generated, load current abnormality signal OC2 (Fig. 5E) is not generated. In this case, only signal OC1A (Fig. 5D) is output from overcurrent factor detector 16. Since signal OC1A (= "1") indicates a fault in the power supply system, switch command CH is kept at logic "1" (Fig. 5G). Therefore, power supply is not restored to the inverter mode, but power supply by means of power source 1 is continued.

Logic circuit 14 for generating signal CH on the basis of signals OC1A and OC2A in Figs. 4 and 5 can be easily realized by properly combining NAND/NOR gates, flip-flops, counters, delay circuits, and the like on the basis of signal timings shown in Figs. 4 and 5. Alternatively, logic circuit 14 can be realized by a general logic IC such as a programmable application logic (PAL).

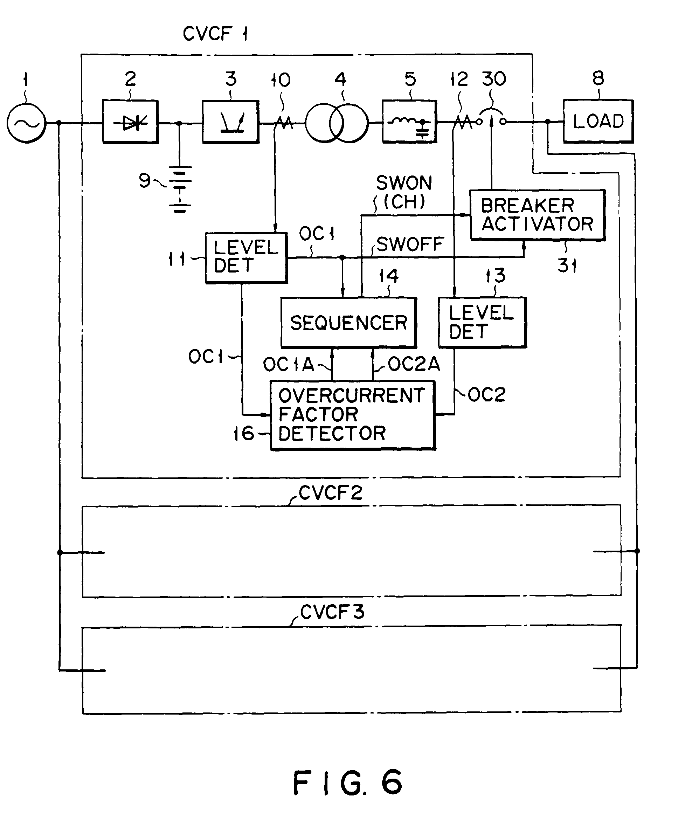

The arrangement can be applied to a parallel system including a plurality of inverters. Fig. 6 shows a parallel system constituted by three uninterruptible power supply units (CVCF1 to CVCF3). The same reference numerals in Fig. 6 denote the same parts as in Fig. 1, and a description thereof will be omitted. Referring to Fig. 6, reference numeral 30 denotes a circuit breaker for connecting the output of the uninterruptible power supply unit to a common bus; and 31, a breaker activator.

In the system shown in Fig. 6, similar to the above-described system, when level detector 11 for detecting the level of an inverter output current detects an overcurrent flowing due to some factor, in order to prevent system down, detector 11 sends breaker open command SW OFF to breaker activator 31 so as to quickly disconnect the power supply unit, from which the abnormal state is detected, from load 8. Subsequently, as described above, overcurrent factor detector 16 checks an overcurrent on the output side of AC filter 5, through which power is supplied to load 8, by using signal OC2. If an overcurrent is not detected on the load 8 side but is detected on the output side of inverter 3, an internal fault occurs. In the parallel system, if an overcurrent is detected on the load 8 side, automatic restoration of a parallel-offed unit cannot be simply performed, unlike the single unit system in Fig. 1. In the parallel system, however, if it is determined that detection of an overcurrent in a common bus current and the like to be supplied to load 8 is erroneous detection, the reliability can be increased by incorporating a sequence for a restarting operation and the like.

As described above, the system shown in Fig. 1 or 6 includes two overcurrent detecting means, i.e., the first overcurrent detecting means (10, 11) for detecting an overcurrent from an inverter output, and the second overcurrent detecting means (12, 13) for detecting an overcurrent from a load current. With this arrangement, power supply is switched from inverter 3 to commercial power source 1 upon detection of an overcurrent by the first detecting means, whereas detection by the second detecting means serves to check whether an overcurrent factor exists in the power supply system or the load. If it is determined that the overcurrent is generated by a factor in the load, power supply is restored to the inverter mode from the commercial power source mode. This prevents system down due to poor control of detecting operations between the two overcurrent detectors, and increases the reliability of the system.

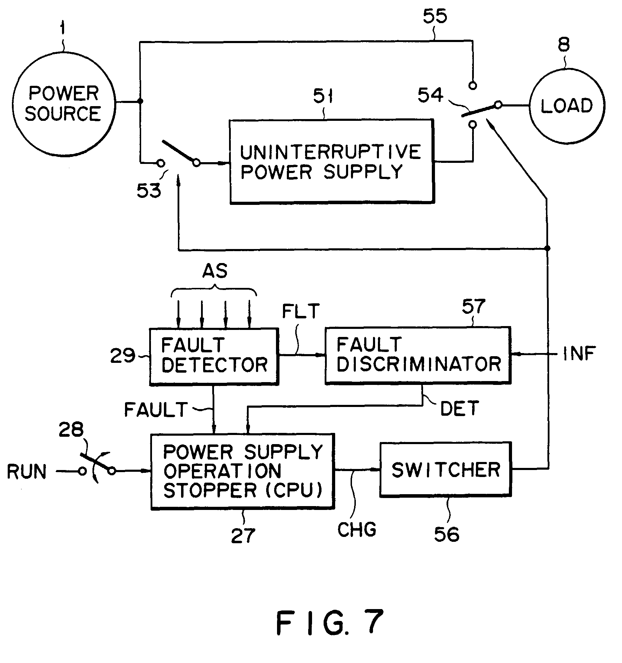

Referring to Fig. 7, reference numeral 51 denotes a conventional uninterruptible power source (which can be formed of rectifier 2, inverter 3, inverter transformer 4, AC filter 5, thyristor switch 6, battery 9, and current transformer 10 shown in Fig. 1); 53, an input breaker; 54, an output switch; 55, a bypass circuit; and 56, a switcher.

When fault detector 29 in uninterruptible power supply 51 detects a fault and stops uninterruptible power supply 51 through power source operation stopper 27 regardless of the state of operation stop command 28, input breaker 53 is opened, and a command is supplied from switcher 56 to output switch 54 so as to cause input AC power source 1 to supply power to load 8 through bypass circuit 55.

Although the operation of load 8 can be maintained by supplying power thereto through bypass circuit 55 in this manner, high-quality power free from the influences of instantaneous voltage variations and overcurrents from power source 1 cannot be supplied to load 8. In order to solve this problem, the system shown in Fig. 7 includes switcher 56 and fault discriminator 57 as additional constituent elements.

In the embodiment shown in Fig. 7, when uninterruptible power supply 51 detects a fault, power supply from uninterruptible power supply 51 to load 8 is switched to power supply from bypass circuit 55 to load 8. At the same time, contents detected by fault detector 29 are discriminated by fault discriminator 57 so as to check whether the fault is caused by an external factor.

There are various types of fault factors. For example, if a fuse disconnection detector (one type of protective detector) is operated, it is determined that the fault is caused due to degradation in quality of an internal component of inverter 3. If a control power source loss detector (another type of protective detector) is operated, it is determined that a control circuit power source of power supply 51 fails. If such a protective detector is operated, it means that the fault is caused by an internal factor in uninterruptible power supply 51. When the fault is caused by an internal factor, uninterruptible power supply 51 cannot be restarted without eliminating the fault factor.

In contrast to this, if a DC detector for monitoring a DC input voltage to inverter 3 in Fig. 1 is operated, an abnormal operation of input AC power source 1 or a voltage drop of battery 9 may be considered as a fault factor. Such a factor can be determined on the basis of changes in detection level of an input voltage detector for monitoring an AC input voltage to rectifier 2 or of a voltage detector for battery 9.

When current transformer 12 is operated, it means that the power used by load 8 is actually increased. Whether this increase is the fault factor can be determined from a change in detection level of current transformer 12. A detecting operation of such a protective detector indicates that a fault of uninterruptible power supply 51 is caused by an external factor. That is, detection of a fault caused by such an external factor means that a fault factor is not present in power supply 51. Therefore, if the external factor is removed, uninterruptible power supply 51 is restarted to supply power to load 8, and the operation can be continuously performed.

Fault discriminator 57 serves to discriminate a fault caused by an internal factor from a fault caused by an external factor. If fault detector 29 is operated and a fault caused by an external factor is determined, uninterruptible power supply 51, which has been stopped because of the functions of fault detector 29 and power supply operation stopper 27, is restarted by fault discriminator 57 through power supply operation stopper 27 and switcher 56. Upon this operation, power supply from bypass circuit 55 to load 8 is switched to power supply from uninterruptible power supply 51 to load 8, thus maintaining the power supply from uninterruptible power supply 51.

According to that arrangement, whether a fault is caused by an external factor can be determined by fault discriminator 57 on the basis of the detection level (AS) of each protective detector arranged in uninterruptible power supply 51 and an operating state of a protective detector which detects the fault or operating states of protective detectors for detecting the fault.

According to the embodiment shown in Fig. 7, if uninterruptible power supply 51 detects a fault, power supply to load 8 is temporarily switched to power supply from bypass circuit 55 to load 8. If, however, fault discriminator 57 determines that the fault is caused by an external factor, the power supply from uninterruptible power supply 51 to load 8 can be restarted.

Since faults of an uninterruptible power supply are often caused by external factors, power supply from uninterruptible power supply 51 to load 8 can be restarted in many cases. Therefore, it is apparent that high-quality power from the uninterruptible power supply can be supplied for a long period of time, which is the object of this apparatus, and the reliability of the power supply can be increased.

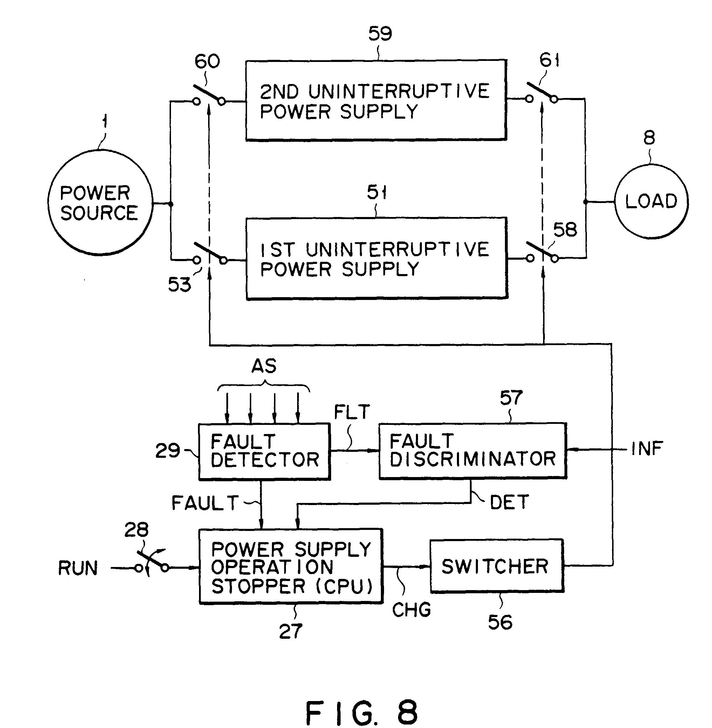

Fig. 8 shows an embodiment of the present invention. Constituent elements in Fig. 8 which are different from these in Fig. 7 are: output breaker 58, second uninterruptible power supply 59, input breaker 60, and output breaker 61. In this arrangement, during a normal operation, input breakers 53 and 60 and output breakers 58 and 61 are closed to perform a parallel operation of uninterruptible power supplies 51 and 59 so as to supply power to load 8.

Similar to the system shown in Fig. 7, if an internal fault occurs in uninterruptible power supply 51, power supply from uninterruptible power supply 51 to load 8 is stopped. If the internal fault is caused by an external factor, power supply from uninterruptible power supply 51 to load 8 is restarted as in the embodiment shown in Fig. 7.

Even if uninterruptible power supply 51 is stopped due to a fault, high-quality power can be continuously supplied from uninterruptible power supply 59. When power supply from uninterruptible power supply 51 to load 8 is restarted, the margin of the power supply system is increased, and hence the reliability of the power supply system (51 and 59) is increased.

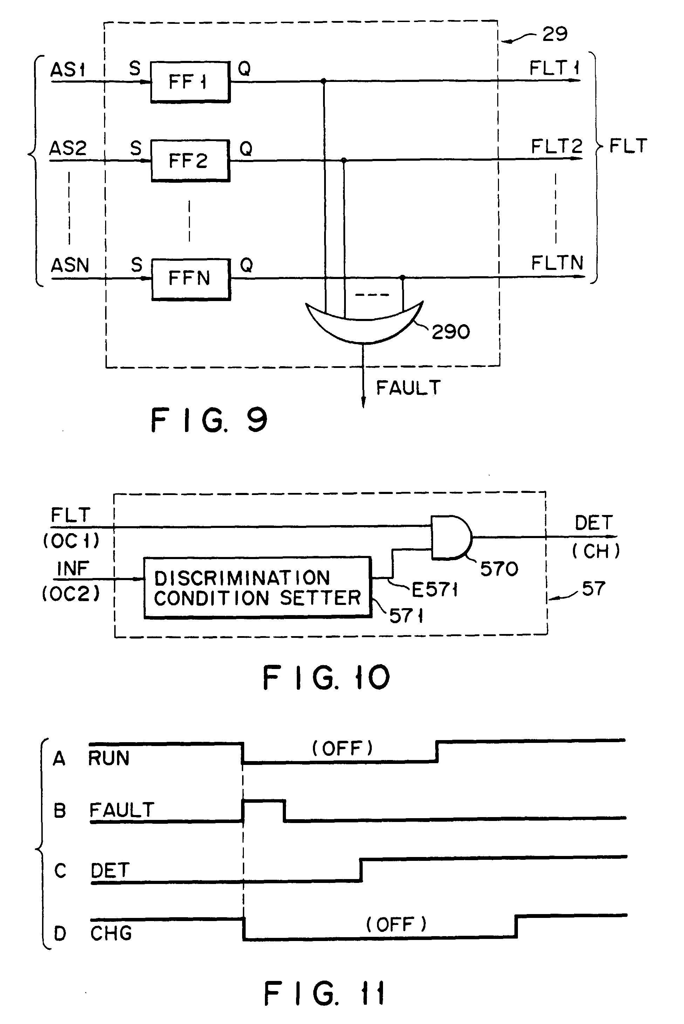

Fig. 9 is a circuit diagram showing a detailed arrangement of fault detector 29 in the power supply system shown in Fig. 7. Power supply 51 includes voltage/current detectors at necessary portions, although they are not shown, and further includes a circuit for monitoring a disconnection state of a fuse or a breaker for circuit protection. When the detectors and the circuit detect voltages and currents which exceed their own predetermined values, or detect disconnection of the fuse, they generate abnormality detection signals AS1, AS2, ..., ASN representing these states.

Abnormality detection signals AS1, AS2, ... ASN are respectively latched by flip-flops FF1 to FFN in Fig. 9. The OR of latched signals AS1, AS2, ... ASN is obtained by OR gate 290, and OR output FAULT is supplied to power supply operation stopper 27.

Furthermore, latched abnormality detection signals AS1, AS2, ... ASN are input, as fault detection signals FLT, to one input terminal of AND gate 570 in Fig. 10. Signal E571 is supplied from discrimination condition setter 571 to the other input terminal of AND gate 570. Signal E571 is used to determine whether an input abnormality detection signal (e.g., AS1) is transient.

The logic level of signal E571 is determined by information INF (e.g., information corresponding to load current abnormality signal OC2 in Fig. 1). More specifically, if information INF corresponds to signal OC2, signal E571 is set at logic "1". At this time, fault detection signal FLT (e.g., AS1) input to AND gate 570 corresponds to inverter output overcurrent signal OC1 in Fig. 1. In this case, signal FLT (corresponding to signal OC1) passes through AND gate 570 and is output as signal DET (corresponding to switch command CH).

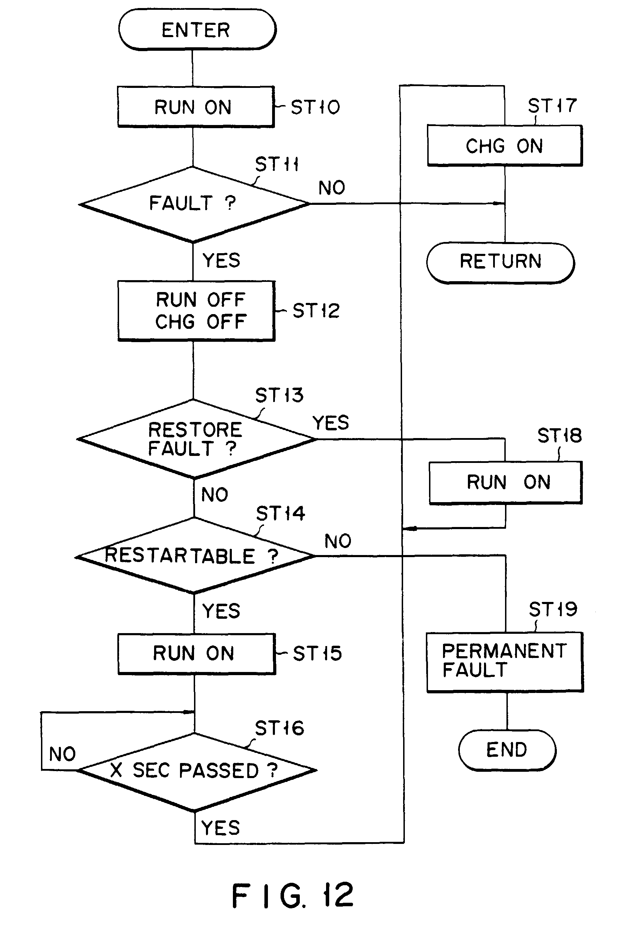

Figs. 11A to 11D are timing charts for explaining an operation of power supply operation stopper 27 in the power supply system in Fig. 7.

If fault signal FAULT (Fig. 11B) is generated during an operation of power supply 51, operation signal RUN (Fig. 11A) is turned off (logic "0"), and power supply switch command CHG (Fig. 11D) is turned off (logic "0"). As a result, power is supplied from power source 1 to load 8.

If fault discriminator 57 determines that the fault is transient, fault discrimination signal DET (Fig. 11C) is set at logic "1". In response to signal DET of logic "1", operation signal RUN (Fig. 11A) is restored to the ON state (logic "1"). When a restarting operation of power supply 51 is completed after operation signal RUN is restored to logic "1", power supply switch command CHG (Fig. 11D) is restored to logic "1", and load 8 receives power from power supply 51. Signal CHG in Fig. 11D can be formed from the signals shown in Figs. 11A to 11C by using a universal PAL chip.

Fig. 12 is a flow chart for explaining a case wherein power supply switching of the power supply system in Fig. 7 is controlled by a CPU using software.

Assume that a CPU incorporated in, e.g., power supply operation stopper 27 is to start the power supply switching routine shown in Fig. 12.

If operation signal RUN (Fig. 11A) is turned on (step ST10), and a fault is subsequently detected (YES in step ST11), both signals RUN and CHG are turned off (step ST12).

If the detected fault is not transient (NO in step ST13), but it is determined that the normal state can be restored (YES in step ST14), operation signal RUN becomes ON again (step ST15). If a predetermined time (X seconds), during which the operation of power supply 51 is stabilized, elapses (YES in step ST16), signal CHG becomes ON again (step ST17), and the control of the CPU is transferred to other processing.

If no fault is detected (NO in step ST11) after operation signal RUN (Fig. 11A) is turned on, the control of the CPU is transferred to other processing.

If the detected fault is transient (YES in step ST13), operation signal RUN is turned on again (step ST18), and the control of the CPU is transferred to other processing.

If the detected fault is not transient (NO in step ST13), and the normal state cannot be restored (NO in step ST14), the fault is processed as a permanent fault (step ST19). In this case, power supply 51 is stopped and is related with another power supply or is repaired.

It is apparent that the present invention can be applied to an uninterruptible power supply system which does not include battery 9 in Fig. 1. In addition, the type and arrangement of the AC power source are not specifically limited.

Various changes and modifications can be made with the spirit and scope of the invention as claimed.

According to the embodiment shown in Fig. 7 or 8, even if an internal fault occurs in an AC power supply such as an uninterruptible power supply, since most of internal faults are caused by external factors, the AC power supply can be restarted to continuously supply power to a load again. Therefore, an AC power supply having the following effects can be realized by the present invention.
(1) The AC power supply can more effectively supply high-quality power to a load, which is the object of the AC power supply, than the system based on the conventional technique.
(2) Since long interruption of the AC power supply due to a fault can be greatly reduced in frequency, the reliability of the power supply can be greatly increased. This prevents public instability and disturbance due to the fault interruption.

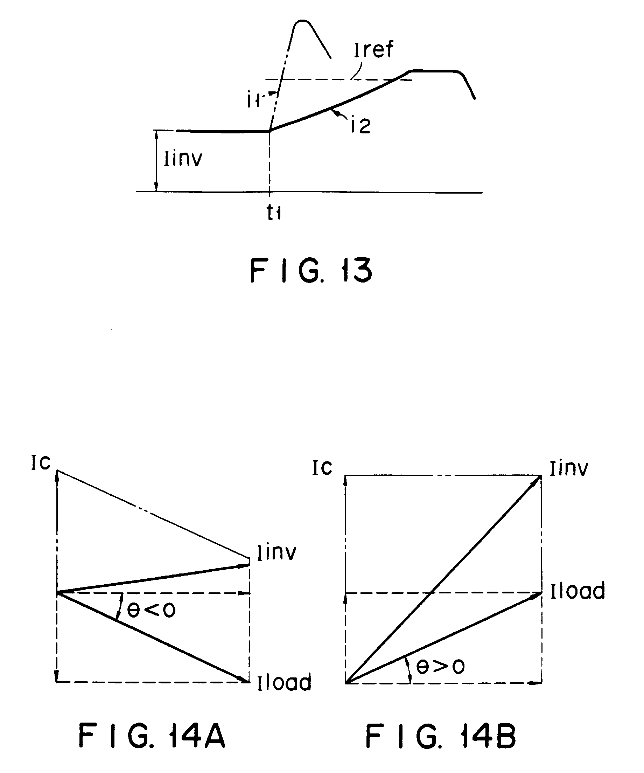

Fig. 13 shows the waveform of a current detected by current transformer 10 in Fig. 1. Referring to Fig. 13, reference symbol Iinv denotes a detection current waveform of current transformer 10. Assume that current i₁ which rises very quickly or current i₂ which rises slowly flows at time t₁ in Fig. 13, and either of the currents reaches overcurrent detection level Iref. In a conventional system, if such a current flows, the uninterruptible power supply is stopped, and the current power supply operation is switched to power supply from commercial power source 1 to load 8.

When an overcurrent which rises very quickly, such as current i₁ in Fig. 13, is detected, the possibility of a rare short-circuiting of inverter transformer 4 or a failure of a component of a PWM controller for inverter 3 is high, and it is estimated that a permanent fault associated with a failure of a component in the uninterruptible power supply occurs.

In contrast to this, an overcurrent which rises slowly, such as current i₂ in Fig. 13, is detected when rising of the overcurrent is restricted by a reactance component of inverter transformer 4. When current i₂ exhibiting a gradual rising curve determined by this reactance component is detected, it is estimated that the fault is caused by a certain factor on the load 8 side instead of a rare short-circuiting of inverter transformer 4. In this case, therefore, if the fault factor is removed, the uninterruptible power supply can be restarted to supply power to load 8. It is determined that such a fault is a transient fault.

Referring to Fig. 7, fault detector 29 receives detection signals AS from various types of protective detectors. Fault detector 29 supplies a first detection signal (logic "1") and a second detection signal (logic "0") to fault discriminator 57 on the basis of the level or change rate of each detection signal. That is, if the detection signal corresponds to current i₁ in Fig. 13 which rises quickly, the first detection signal is supplied, and if it corresponds to current i₂ which rises slowly, the second detection signal is supplied. Fault discriminator 57 determines on the basis of the logic level of this overcurrent detection signal whether the fault is a permanent or transient fault.

The protective detectors arranged in uninterruptible power supply 51 also include a protect detector for detecting only a permanent fault. For example, the control power source loss detector is operated when the control circuit power source fails or its load-side component fails. These faults are permanent faults. Therefore, if the control power source loss detector is operated, and a fault is detected by fault detector 29, fault discriminator 57 determines that the fault is a permanent fault.

As has been described above, since fault discriminator 57 discriminates a permanent fault from a transient fault, even if uninterruptible power supply 51 is stopped, restoration of power supply 51 can be easily performed. More specifically, if a transient fault is determined by fault discriminator 57, even if the power supply mode is temporarily switched to the bypass circuit mode in which power is supplied to load 8 through bypass circuit 55, uninterruptible power supply 51 is restarted after a factor causing the transient fault is removed. With this operation, power supply from uninterruptible power supply 51 to load 8 can be restarted. In the present invention, since fault detection is performed by means of fault discriminator 57 so as to discriminate a transient fault from a permanent fault in this manner, the restoration time required to restore the uninterruptible power supply after occurrence of a fault can be greatly shortened.

Another method of discriminating a permanent fault from a transient one will be described below with reference to Figs. 14A and 14B. Fig. 14A shows a case wherein a current flowing in load 8 has a lagging power factor. Fig. 14B shows a case wherein a current flowing in load 8 has a leading power ratio. Referring to Figs. 14A and 14B, reference symbol Iload denotes a detection current of output overcurrent detector 12; and Iinv, a detection current of inverter overcurrent detector 10.

Since current Iinv detected by current transformer 10 corresponds to a current obtained by mixing current Iload detected by current transformer 12 with a current component Ic from a capacitor in AC filter 5 in terms of a vector, no significant difference is present between detection currents Iinv and Iload at the lagging power factor (θ < 0). At the leading power factor (θ > 0), however, detection current Iinv becomes much larger than Iload (Fig. 14B). For this reason, even if a current detected by current transformer 12 dose not reach the overcurrent level (IL1), a current detected by current transformer 10 may exceed overcurrent detection level Iref.

In such a case, the overcurrent from current transformer 10 is detected by fault detector 29, and whether the detection current level of current transformer 12 exceeds a predetermined value (IL1) is checked to supply detection signal FLT to fault discriminator 57, thereby causing fault discriminator 57 to discriminate the contents of signal FLT. With this operation, it can be determined whether the overcurrent is caused by short circuit of inverter transformer 4 or based on the above-mentioned power factor on the load 8 side. When fault detection is performed by fault detector 29 in this manner, whether the fault is transient may be determined by checking the levels, changes, or generating timings of detection signals from other protective detectors.

According to the present invention, even if an internal fault occurs in the uninterruptible power supply system, since the fault discriminator detects the generation timings, levels, change rates, and the like of detection signals from various types of protective detectors so as to discriminate a transient fault from a permanent fault on the basis of the detected output signals, restoration of the uninterruptible power supply system upon occurrence of an internal fault can be easily performed.

Since most of internal faults, especially in an uninterruptible power supply system, are transient faults, the system need not be stopped for a long period time, and can be restarted to quickly supply stable power to a load. This can minimize degradation in reliability of a power supply system of a large computer system, caused by fault factor inspection which takes a long period of time.

Note that techniques associated with the present invention are disclosed in the following U.S. Patent publications:
(1) U.S. Patent No. 4,340,823 issued on Jul. 20, 1982 (Miyazawa), "Uninterruptible Power Supply"
(2) U.S. Patent No. 4,641,042 issued on Feb. 3, 1987 (Miyazawa), "Power Supply System and a Control Method thereof"

## Claims

1. An AC power supply system constituted by at least two uninterruptible power supplies (51,59), connected in parallel with each other, for supplying stable power to a load, said AC power supply sytem comprising:
means (53,56,58,60,61) for, when a fault occurs in either of said uninterruptible power supplies, stopping an operation of said uninterruptible power supply (51) which failed, and temporarily disconnecting the failed uninterruptible power supply (51) from the load (8);
means (29,57) for determining whether the fault is caused by an internal factor of said uninterruptible power supply (51) or by an external factor thereof; and
means (27,28) for, when it is determined that the fault is caused by the external factor, restarting said uninterruptible power supply which failed so as to perform a parallel operation thereof with said uninterruptible power supply in which no fault was detected.

2. An AC power supply system constituted by at least two uninterruptible power supplies (51,59), connected in parallel with each other, for supplying stable power to a load, said AC power supply system comprising:
means (53,56,58,60,61) for, when a fault occurs in either of said uninterruptible power supplies, stopping an operation of said uninterruptible power supply which failed, and temporarily disconnecting the failed uninterruptible power supply from the load;
means (29,57) for determining whether the fault is a permanent or transient fault; and
means (27,28) for, when it is determined that the fault is transient, restarting said uninterruptible power supply which failed and is stopped so as to perform a parallel operation thereof with said uninterruptible power supply in which no fault was detected.

## Patentansprüche

1. WS-Stromversorgungssystem, das von mindestens zwei unterbrechungsfreien Stromversorgungseinrichtungen (51, 59) gebildet wird, die parallelgeschaltet sind, zur stabilisierten Stromversorgung einer Last, wobei das Ws-Stromversorgungssystem aufweist:
eine Einrichtung (53, 56, 58, 60, 61), die beim Auftreten einer Störung in einer der beiden unterbrechungsfreien Stromversorgungseinrichtungen einen Betrieb der ausgefallenen unterbrechungsfreien Stromversorgungseinrichtung (51) ausschalten und die ausgefallene unterbrechungsfreie Stromversorgungseinrichtung (51) vorübergehend von der Last (8) abtrennen soll;
eine Einrichtung (29, 57) zum Feststellen, ob die Störung durch einen inneren Faktor der unterbrechungsfreien Stromversorgungseinrichtung (51) oder durch einen äußeren Faktor verursacht wird; und
eine Einrichtung (27, 28), die bei der Feststellung, daß die Störung durch den äußeren Faktor verursacht wird, die ausgefallene unterbrechungsfreie Stromversorgungseinrichtung wieder einschalten soll, um einen Parallelbetrieb mit der unterbrechungsfreien Stromversorgungseinrichtung durchzuführen, in der keine Störung festgestellt wurde.

2. Ws-Stromversorgungssystem, das von mindestens zwei unterbrechungsfreien Stromversorgungseinrichtungen (51, 59) gebildet wird, die parallelgeschaltet sind, zur stabilisierten Stromversorgung einer Last, wobei das Ws-Stromversorgungssystem aufweist:
eine Einrichtung (53, 56, 58, 60, 61), die beim Auftreten einer Störung in einer der beiden unterbrechungsfreien Stromversorgungseinrichtungen einen Betrieb der ausgefallenen unterbrechungsfreien Stromversorgungseinrichtung ausschalten und die ausgefallene unterbrechungsfreie Stromversorgungseinrichtung vorübergehend von der Last abtrennen soll;
eine Einrichtung (29, 57) zum Feststellen, ob die Störung eine permanente oder vorübergehende Störung ist; und
eine Einrichtung (27, 28), die bei der Feststellung, daß die Störung vorübergehend ist, die ausgefallene und ausgeschaltete unterbrechungsfreie Stromversorgungseinrichtung wieder einschalten soll, um einen Parallelbetrieb mit der unterbrechungsfreien Stromversorgungseinrichtung durchzuführen, in der keine Störung festgestellt wurde.

## Revendications

1. Système d'alimentation en courant alternatif constitué par au moins deux alimentations (51, 59) du type sans coupure connectées en parallèle l'une avec l'autre pour la transmission stable d'énergie à une charge, le système d'alimentation en courant alternatif comprenant :
un dispositif (53, 56, 58, 60, 61) destiné, lorsqu'un défaut se produit dans l'une quelconque de ces alimentations, à interrompre le fonctionnement de l'alimentation (51) qui présente un défaut, et la déconnexion temporaire de l'alimentation (51) qui présente un défaut de la charge (8),
un dispositif (29, 57) de détermination si le défaut est provoqué par un facteur interne de l'alimentation (51) sans coupure ou par un facteur extérieur à cette alimentation, et
un dispositif (27, 28) destiné, lorsqu'il est déterminé que le défaut est provoqué par un facteur externe, à remettre en fonctionnement l'alimentation sans coupure qui a présenté le défaut pour la mise en fonctionnement en parallèle avec l'alimentation sans coupure dans laquelle aucun défaut n'a été détecté.

2. Système d'alimentation en courant alternatif constitué par au moins deux alimentations (51, 59) du type sans coupure, connectées en parallèle l'une à l'autre, destinées à une transmission stable d'énergie à une charge, le système d'alimentation en courant alternatif comprenant :
un dispositif (53, 56, 58, 60, 61) destiné, lorsqu'un défaut se produit dans l'une des alimentations sans coupure, à arrêter le fonctionnement de cette alimentation sans coupure ou dont le fonctionnement ne peut pas être interrompu qui a présenté un défaut, et la déconnexion temporaire de l'alimentation qui présente un défaut de la charge,
un dispositif (29, 57) destiné à déterminer si le défaut est un défaut permanent ou transitoire, et
un dispositif (27, 28) destiné, lorsqu'il est déterminé que le défaut est transitoire, à remettre en fonctionnement l'alimentation qui a présenté le défaut et qui est arrêtée pour l'exécution de son fonctionnement en parallèle avec l'alimentation sans coupure dans laquelle aucun défaut n'a été détecté.
